# EUROPEAN PATENT APPLICATION

(11) **EP 1 943 906 A2**
(43) Date of publication of application: **16.07.2008**
(21) Application number: 07123379.5
(22) Date of filing: 17.12.2007
(51) Int. Cl.: A23G 9/04, A23G 9/48

(54) **Integrated process for the preparation of a food product based on homemade ice-cream and/or "semifreddo" combined with drinks**

(30) Priority: 19.12.2006 IT MI20062428
(71) Applicant: G.S.G. S.r.l., 36100 Vicenza (IT)
(72) Inventor: Bravo, Genesio, 36075, Alte Ceccato (Vicenza) (IT); Bravo, Giuseppe, 36050, Sovizzo ( Vicenza) (IT)
(74) Representative: Martegani, Franco

(57) **Abstract**

An integrated process for the preparation of a food product based on homemade ice-cream and/or "semifreddo", which comprises the following phases:
a) preparation of homemade ice-cream and/or "semifreddo" with the relative procedure in an apparatus for the production of homemade ice-cream;
b) preparation of a single-dose portion of ice-cream by introducing a portion of homemade ice-cream into a single-dose container;
c) rapid abatement of "semifreddo" and/or ice-cream in the single-dose container and storage in a negative preserver.

According to the invention, the process envisages a phase
d) in which the single-dose portion of ice-cream coming from phase c) is extruded into the final container, and a further phase e) for the addition of a drink to be poured onto the product portioned in the final container, coming from phase d).

## Description

The present invention relates to an integrated process for the preparation of a food product based on homemade ice-cream and/or "semifreddo", combined with drinks and the relative product.

Nowadays, the number of people who eat meals and/or snacks out is constantly growing. This necessity has caused increasing interest in new products which can combine the quality and organoleptic characteristics of an artisan or homemade product with industrial production methods of the same and with considerable practicality for the eating and transporting of the end-product.

Among the qualities which are particularly requested is producing a product in which the frozen and/or "semifreddo" part maintains the characteristics of softness and foaminess of freshly prepared homemade ice-cream.

The Applicant has now surprisingly found that the particular process according to the present invention allows the above objectives to be achieved, overcoming the drawbacks of the state of the art.

In particular, the process according to the present invention allows a process for the production of homemade ice-cream to be used, whose product is then combined with a "semifreddo" and hot drinks, such as hot coffee/milk/cappuccino, hot chocolate, or cold drinks such as fruit sauces, for example in the ice-cream corners of cafeterias, restaurants, hotels, canteens, self-service restaurants and catering services in general.

An object of the present invention therefore relates to an integrated process for the preparation of a food product based on homemade ice-cream and/or "semifreddo", which comprises the following phases:
a) preparation of homemade ice-cream and/or "semifreddo" with the relative procedure in an apparatus for the production of homemade ice-cream;
b) preparation of a single-dose portion of ice-cream by introducing a portion of homemade ice-cream into a single-dose container;
c) rapid abatement of "semifreddo" and/or ice-cream in the single-dose container and storage in a negative preserver;
   characterized in that it comprises a phase d) in which the single-dose portion of ice-cream coming from phase c) is extruded into a final container, and a further phase
e) for the addition of a drink to be poured onto the product portioned in the final container, coming from phase d).

In particular, phase e) can comprise the addition of a hot drink or a cold drink to the product portioned in the final container, for example a glass. The product is then sold for immediate consumption on the part of the final user.

Alternatively, the portioned and extruded product coming from phase d) is sold directly to the final user to be taken away and completed by the addition of the hot drink or cold drink such as a fruit sauce, immediately before being eaten, or by the addition of a cold drink and subsequent heating of the food product in a microwave oven, again immediately before being eaten.

In particular, the hot drink to be used in phase e) can be selected from coffee, cappuccino or milk, chocolate, whereas the cold drink can be a fruit sauce.

The portioning phase b) of the homemade ice-cream in a single-dose container, for example in a flexipan having a diameter of 5 to 6 cm and a depth of 3 to 4 cm, for the preparation of an ice-cream tablet, is effected by inserting the homemade ice-cream into the container with a portioner.

In particular, in phase d), after extrusion, small holes can also be produced in the ice-cream positioned on the "semifreddo".

Phase a) for the preparation of homemade ice-cream and/or "semifreddo" is carried out in an apparatus which comprises pasteurization and the contemporaneous whipping of substantially equal doses of mixture for the preparation of ice-cream and/or "semifreddo".

In particular, phase a) for the preparation of homemade ice-cream and/or "semifreddo" in an apparatus for the production of homemade ice-cream is preferably effected with the apparatus produced by the company BRAVO S.p.A. with the trade-name of Trittico Executive.

The process according to the present invention can also comprise the preparation of at least one sauce or cream which can be positioned in the final container before the extrusion phase d) of the ice-cream.

The "semifreddo" can also be positioned in the final container before the extrusion phase d) of the ice-cream.

Phase d) for the extrusion of the single-dose portion of ice-cream in the final container is carried out with a draw-plate, in particular with a draw-plate of the "spaghetti ice" type.

The rapid temperature abatement time in phase c) is preferably about 30 minutes, for a temperature ranging from -28 to -30°C.

The storage phase in a negative preserver allows the ice-cream in a single-dose portion and/or the "semifreddo" to be preserved for up to 6 months, if preserved in closed containers at a temperature of -20°C. Alternatively, the product preserved at -14°C in a negative preserver can last for up to 21 days.

A further object of the present invention relates to a structured food product comprising a combination of at least two products selected from homemade ice-cream and/or "semifreddo" with different flavours, coupled with a drink, in a single container.

In particular, the homemade ice-cream of the structured food product according to the present invention is an extruded product. Furthermore, the drink can be either hot or cold.

In particular, the food product according to the present invention envisages that the "semifreddo" and/or sauce and/or cream be positioned underneath and the extruded homemade ice-cream on top, in the final container.

The food product according to the present invention can have holes in the extruded homemade ice-cream in the final container.

It can also comprise readymade toppings and sauces.

In particular, the hot drink is preferably selected from coffee, cappuccino, milk or chocolate. The hot drink is preferably "espresso" coffee. In particular, the cold drink is fruit sauce.

The end-product thus structured is in fact divided into various combinations of flavours, for both the "semifreddo" and for the ice-cream, also enriched with readymade toppings and sauces, which enhance the taste of the ice-cream.

The final container preferably consists of a glass having a closing lid.

A fundamental advantage of the process according to the present invention is that it produces a soft and energetic ice-cream, which can be contemporaneously eaten and drunk, a food product which preservers the quality of a homemade product coupled with considerable practicality for its consumption and transportation.

A further advantage of the food product according to the present invention is that it contains the properties and characteristics of a liquid and energetic drink such as coffee or fruit sauces, coupled with a high-quality artisan product, but at the same time it is easy to produce even for non-qualified operators.

Another advantage of the product according to the present invention is that it can be taken instead of the traditional cup of coffee by end-users who do not have time to stop for a snack. They can continue to drink a tasty and simple product, without stopping, while walking or in the subway. Unlike ice-cream, which must be eaten rapidly before it melts, this new combination according to the present invention offers an alternative solution with controlled melting and more energetic than the usual coffee.

The characteristics and advantages of a process and a product according to the present invention will appear more evident from the following illustrative and nonlimiting description, referring to the following examples.

In the embodiments of the process and product according to the present invention described in the following examples, the following equipment was used:
1 Trittico Executive;
1 cream whipper, for example minitop model;
1 rapid temperature-abating device;
bain marie;
draw-piece of the Spaghetti Ice type;
closeable transparent plastic glasses having a capacity of 200 ml;
1 electronic scales div. 56 grams;

The present invention is obviously not limited to the use of said equipment, but is also extended to processes for the preparation of homemade ice-cream and products obtained with equivalent equipment for the production of homemade ice-cream.

The following starting materials were also used:
fresh egg yolk;
uht whole milk;
fresh cream;
animal gelatin;
cocoa in powder form 22-24%;
invert sugar;
saccharose;
vanilla berries;
dried lean milk;
semi-processed products for ice-cream selected from:
   hazel-nut paste;
   pistachio paste;
   semi-processed product in powder form: base for ice-cream. This is a product in powder form consisting of sugars, gelifiers, emulsifiers and stabilizers, available on the market in different dosages and compositions and
   used as solid base for the production of homemade ice-cream.

### Example 1

### Preparation of tablets of ice-cream

Ingredients:
- 1000 g of whole milk;
- 150 g of sugar;
- 150 g of ice-cream base;
- 150 g of fresh cream at 35% of fats;
- 100 g of egg yolk;
- 20 g of dextrose.

The mixture of all the ingredients was poured into the upper Trittico tank (or more generally of an apparatus for the production of homemade ice-cream with the characteristics specified in the above description and in claim 2).

The "ice-cream" program was selected in the Trittico apparatus, in which the above mixture was mixed at a low temperature in the upper tank and was then brought to pasteurization temperature ranging from 82°C to 87°C until the automatic heating-end signal.

The mixture was then sent to the lower Trittico Executive tank and whipped with the help of the ionic system until the automatic end signal.

After an extremely dry whipping, the ice-cream was extracted from the Trittico Executive, it was modeled in a flexipan having a diameter of 5 to 6 cm and a depth of 3 to 4 cm.

The flexipan was subjected to rapid temperature abatement for about 30 minutes to a temperature ranging from -30°C to -28°C and the ice-cream tablets thus obtained were stored in a negative preserver (for example an AFFOGATEAU kiosk) at a temperature ranging from -20°C to -10°C.

For illustrative purposes, the following flavours of homemade ice-cream were prepared with the use of a Trittico Executive apparatus according to the program: AUTOMATIC IONIC SIST, described above.
PLAIN ice-cream flavour:
whole milk, 2.5 1;
fresh cream, 500 g;
saccharose, 650 g;
invert sugar, 50 g;
dry lean milk, 100 g;
cream ice-cream base 100, 250 g;
VANILLA CREAM flavour:
unsugared egg yolk, 350 g;
fresh cream, 350 g;
whole milk, 2350 g;
base 100, 250 g;
dry lean milk, 100 g;
sugar, 650 g;
invert sugar, 50 g.
HAZEL-NUT flavour:
whole milk, 2700 g;
base 100, 250 g;
invert sugar, 50 g;
saccharose, 650 g;
hazel-nut paste, 350 g.
CHOCOLATE flavour:
whole milk, 2350 g;
fresh cream, 350 g;
water, 350 g;
cocoa at 22-24%, 250 g;
saccharose, 650 g;
invert sugar, 50 g.

### Example 2

### Preparation of sauces and/or concentrates

### A. Custard

INGREDIENTS
- 700 g of whole milk;
- 300 g of fresh cream at 35% of fat;
- 200 g of egg yolk;
- 150 g of sugar.

The mixture of all the ingredients was poured into the upper Trittico tank (or more generally of an apparatus for the production of homemade ice-cream with the characteristics specified in the above description and in claim 2) .

The "free" program was selected in the Trittico apparatus, in which the above mixture was mixed at a low temperature in the upper tank and was then brought to pasteurization temperature ranging from 82°C to 87°C until the automatic end signal.

The mixture was then sent to the lower Trittico Executive tank and whipped with the help of the ionic system until the automatic end signal.

The custard thus obtained was stored in a negative preserver (for example an AFFOGATEAU kiosk) at a temperature ranging from 3°C to 5°C.

### B. Chocolate sauce

INGREDIENTS
- 500 g of whole milk;
- 500 g of fresh cream at 35% of fat;
- 400 g of semi-bitter coating;
- 100 g of cocoa 22 at 24% of fat;
- 100 g of sugar;
- 2 g of gelatin.

All the ingredients are mixed (except for the gelatin) for every recipe, and the mixture is poured into the upper Trittico tank (or more generally of an apparatus for the production of homemade ice-cream with the characteristics specified in the above description and in claim 2).

The "Bavarian" program was selected in the Trittico apparatus, in which the above mixture was mixed at a low temperature in the upper tank and was then brought to pasteurization temperature ranging from 82°C to 87°C until the machine required the addition of gelatin, already treated and swollen in cold water, and the pasteurization was then allowed to continue until the automatic heating-end signal.

The mixture was then sent to the lower Trittico Executive tank and cooled to a temperature ranging from 13°C to 20°C until the automatic whipping-end signal.

The chocolate sauce thus obtained was stored in bain marie.

### C. Caramel sauce:

INGREDIENTS
- 700 g of glucose;
- 700 g of fresh cream at 35% of fat;
- 700 g of cream caramel;
- 300 g of salted butter;
- 2 g of vanilla.

The mixture of all the ingredients (except for the cream caramel) was poured into the upper Trittico tank (or more generally of an apparatus for the production of homemade ice-cream with the characteristics specified in the above description and in claim 2).

The "free" program was selected in the Trittico apparatus, in which the above mixture was mixed at a low temperature in the upper tank and was then brought to pasteurization temperature ranging from 103°C to 106°C: when the machine reached the temperature of 105°C, it emitted an acoustic signal: the operator then added the cream caramel allowing the cooking to continue for a time of two and five minutes. The mixture was then discharged still hot through the chute and the caramel sauce thus obtained was stored in bain marie.

### D. fruit concentrate

INGREDIENTS
- 1 kg of frozen fruit puree containing 10% sugar;
- 100 g of sugar;
- 20 g of lemon juice.

The mixture of all the ingredients was poured into the upper Trittico tank (or more generally of an apparatus for the production of homemade ice-cream with the characteristics specified in the above description and in claim 2).

The "free" program was selected in the Trittico apparatus, in which the above mixture was prepared by inserting in order, the frozen puree, without being thawed, followed by sugar and lemon, and was then brought to pasteurization temperature ranging from 62°C to 66°C until the automatic end signal.

The mixture was then sent to the lower Trittico Executive tank and cooled to a temperature ranging from 10°C to 15°C until the automatic end signal.

The fruit concentrate thus obtained was stored in a negative preserver (for example an AFFOGATEAU kiosk) at a temperature ranging from 3°C to 5°C.

### Example 3

### Preparation of "semifreddi"

PREPARATION OF "SEMIFREDDO" WITH CUSTARD
- INGREDIENTS FOR MODEL 305 of Trittico Executive (production capacity 5 1);
- whole milk 3 1;
- castor sugar (saccharose) 900 g;
- unsugared fresh or pasteurized egg yolk 900 g;
- fish-glue 45 g.

The following products were poured into a basin in the order indicated: egg yolk, milk and sugar, mixed with a whisk and then poured into the upper part of the Trittico apparatus (or more generally an apparatus for the production of homemade ice-cream with the characteristics specified in the above description and in claim 2).

Program 2, custard, was selected in the Trittico apparatus, and the start button pressed: the machine started heating and mixing, until a temperature of 83°C was reached. In the meantime, the fish-glue was put in cold water for a few minutes until its volume had increased.

When the machine had reached 83°C, it emitted an acoustic signal and the display revealed the actual temperature in the upper bath: the lid was then opened and the fish-glue, previously extracted from the cold water, was added, the system was subsequently reclosed and the machine then reached the pre-established temperature of 90°C.

The machine emitted an acoustic sound, indicating on the display that the butterfly valve should be opened. The mixture descended into the lower tank, and the start-button in the cold part was pressed.

The apparatus brought the compound to a temperature of +14°C, revealed on the display, subsequently emitting an acoustic sound: the custard was then extracted from the front door.

2 1 of cream and 600 g of saccharose sugar were poured into the cream whipper and the cream was then whipped.

1.5 kg of semi-whipped cream were then added to every kg of custard, slowly mixing upwards with a soft spatula. The custard semifreddo was thus prepared.

For "tiramisu semifreddo": "tiramisu semifreddo" was prepared using exactly the same procedure as that adopted for custard semifreddo, adding 200 g of "tiramisu" paste for every kg of custard, respecting the following proportion: 1 kg of custard + 200 g of "tiramisu" paste + 1.5 kg of semi-whipped cream.

For "pistachio semifreddo": "pistachio semifreddo" was prepared using exactly the same procedure as that adopted for tiramisu semifreddo, adding 200 g of pistachio paste instead of tiramisu paste.

For "gianduia semifreddo": "gianduia semifreddo" was prepared using exactly the same procedure as that adopted for tiramisu semifreddo, adding 200 g of gianduia paste instead of tiramisu paste.

The semifreddo to be used in the process and product according to the present invention can therefore be produced with the same starting materials commonly adopted in ice-cream production. The recipes were structured so as to be the same for the different pastes, within the concept of an extreme simplification of the production management.

### Example 4

### Preparation of the end-product ready for consumption on the part of the final user

The types of semifreddo, homemade ice-cream and/or sauces prepared as described in examples 1-3, were used.

The desired custard or sauce or semifreddo were poured onto the bottom of the cup or glass representing the final container, respecting the quantities, i.e. up to the first mark (50 g of semifreddo or sauce or cream were poured onto the bottom of the 200 cc glasses).

A tablet of ice-cream was then inserted in the Spaghetti Ice draw-plate (which could have the trade-name AFFOGATEAU). The product was extruded into the underlying glass, obtaining an ice-cream having the same softness as during extraction after whipping.

The hot drink selected by the final user: espresso coffee, milk, cappuccino or hot chocolate or the cold drink, i.e. fruit sauce, was then added, drowning the ice-cream with hot coffee obtained with the coffee machine situated in the AFFOGATEAU kiosk, or adding hot chocolate, caramel sauce or red fruit concentrate.

In order to decorate the product, it is also possible to add a foamy cream on the top, produced with a BRAVO Minitop, whose thermostat should be regulated at a temperature of +1 to +4°C and the cream preserved in the machine should have a temperature ranging from 3°C to 5°C.

Finally the glass was decorated by sprinkling with cocoa, ground nuts, almonds or any other desired topping.

The end-product thus structured was provided with a "granita" straw, optionally decorated with a small blob of whipped cream, and served directly to the end-user.

Thanks to the holes formed with the mould dipped in alcohol, small channels were created in the semifreddo and ice-cream through which the hot drink descended, thus joining the cold solid, heating it and creating a creamy product, neither liquid nor solid, neither cold hot nor hot. The bitter coffee added is sweetened by the semifreddo and ice-cream.

The following combinations were prepared in accordance with the process described above.
A) *normal semifreddo (custard and cream);
   + vanilla cream ice-cream;
   + coffee (1 espresso coffee).
B) *"tiramisu" semifreddo);
   + chocolate ice-cream;
   + vanilla topping;
   + 1 espresso coffee.
C) *"tiramisu" semifreddo;
   + chocolate ice-cream;
   + vanilla topping;
   + 30 g of hot milk.
D) *"gianduia" semifreddo;
   + hazel-nut ice-cream;
   + caramel topping;
   + 1 espresso coffee.
E) *"pistachio" semifreddo;
   + vanilla ice-cream;
   + vanilla topping;
   + drops of extra-dark chocolate;
   + 1 espresso coffee.

### Example 5

### PREPARATION OF THE PRODUCT IN A GLASS to be taken away and completion on the part of the end-user

The types of "semifreddo", homemade ice-cream and/or sauces prepared as described in Examples 1-3 were used.

A custard semifreddo (custard with cream) was removed with a dosage strainer and 50 g of semifreddo were poured onto the bottom of 200 cc glasses.

A tablet of ice-cream was then inserted in the Spaghetti Ice draw-plate (or AFFOGATEAU ICE machine). The product was extruded into the underlying glass, obtaining an ice-cream having the same softness as during extraction after whipping.

A sprinkling of the desired topping was added.

Four small holes were then formed in the ice-cream with a specific wooden mould dipped in alcohol (antifreeze).

The glass was then inserted in a temperature abater at -20°C for 15 minutes and then passed into a preserver at -14°C.

By closing the product, prepared as described above, in the glass with the specific lid, it was preserved as such (for up to 6 months) at -20°C.

The final combination of ingredients was then directly effected by the end-user who consumes the product in his own home.

The drink suggested according to the combinations of example 4 was poured cold, in the quantities suggested, into the glass containing the product, subsequently heating the glass for 2,400 seconds in a microwave oven.

The product maintained the creaminess and consistency described above, also when this last phase was effected at the home of the end-user.

## Claims

1. An integrated process for the preparation of a food product based on homemade ice-cream and/or "semifreddo", which comprises the following phases:
a) preparation of homemade ice-cream and/or "semifreddo" with the relative procedure in an apparatus for the production of homemade ice-cream;
b) preparation of a single-dose portion of ice-cream by introducing a portion of homemade ice-cream into a single-dose container;
c) rapid abatement of "semifreddo" and/or ice-cream in the single-dose container and storage in a negative preserver;
**characterized in that** it envisages a phase d) in which the single-dose portion of ice-cream coming from phase c) is extruded into the final container, and a further phase
e) for the addition of a drink to be poured onto the product portioned in the final container, coming from phase d).

2. The process according to claim 1, **characterized in that** phase a) is effected with an apparatus which comprises the pasteurization and contemporaneous whipping of substantially equal doses of mixture for the preparation of ice-cream and/or semifreddo.

3. The process according to claim 1, **characterized in that** it also envisages the preparation of at least one sauce or cream which are placed in the final container before the extrusion phase d) of the ice-cream.

4. The process according to claim 1, **characterized in that** it also envisages that the semifreddo be positioned in the final container before the extrusion phase d) of the ice-cream.

5. The process according to claim 1, **characterized in that** the drink to be used in phase e) is a hot drink, preferably selected from coffee, cappuccino, milk or hot chocolate.

6. The process according to claim 1, **characterized in that** the drink to be used in phase e) is a cold drink, preferably fruit sauce.

7. The process according to claim 1, **characterized in that** the extrusion phase d) of the single-dose portion of ice-cream into the final container is effected with a draw-plate.

8. The process according to claim 1, **characterized in that** the rapid temperature abatement time in phase c) is about 30 minutes, at a temperature ranging from -28 to - 30°C.

9. The process according to claim 1, **characterized in that** the storage phase is effected in a negative preserver at a temperature ranging from -10°C to -20°C for a period of less than 6 months.

10. The process according to claim 1, **characterized in that** the storage phase is effected in closed containers at a temperature of -14°C for less than 21 days.

11. The process according to claim 1, **characterized in that** phase e) comprises the addition of a drink to the product portioned in the container directly by the end-user, immediately before consumption.

12. A structured food product, comprising a combination of at least two products selected from homemade ice-cream and/or semifreddo having different flavours, combined in a single container with a drink.

13. The food product according to claim 12, **characterized in that** the homemade ice-cream is an extruded product.

14. The food product according to claim 12, **characterized in that** the drink is a hot drink, preferably selected from coffee, cappuccino, milk or hot chocolate.

15. The food product according to claim 14, **characterized in that** the hot drink is espresso coffee.

16. The food product according to claim 12, **characterized in that** the drink is a cold drink, preferably fruit sauce.

17. The food product according to claim 12, **characterized in that** in the final container, the semifreddo and/or sauce and/or cream is positioned on the bottom and the homemade ice-cream on the top.

18. The food product according to claim 12, **characterized in that** there are possibly holes in the homemade ice-cream positioned on top of the semifreddo in the container.

19. The food product according to claim 12, **characterized in that** it also comprises readymade toppings and sauces.
